# EUROPÄISCHE PATENTSCHRIFT

(11) **EP 1 219 504 B1**
(45) Veröffentlichungstag und Bekanntmachung des Hinweises auf die Patenterteilung: **29.03.2006**
(21) Anmeldenummer: 01130898.8
(22) Anmeldetag: 27.12.2001
(51) Int. Cl.: B60R 21/16, B60R 21/20

(54) **Gassack-Rückhaltesystem**
Air bag restraint system
Sac gonflable de retenue

(30) Priorität: 28.12.2000 DE 20022019 U
(43) Veröffentlichungstag der Anmeldung: 03.07.2002
(73) Patentinhaber: TRW Automotive Safety Systems GmbH, 63743 Aschaffenburg (DE)
(72) Erfinder: Lorenz, Christian, 63849 Leidersbach 3 (DE); Bieber, Udo, 63843 Niedernberg (DE); Derrick, John-Oliver, 97265 Hettstadt (DE)
(74) Vertreter: Kitzhofer, Thomas

(56) Entgegenhaltungen:
- DE-A- 3 630 685
- DE-A- 19 749 914
- DE-U- 20 010 726
- PATENT ABSTRACTS OF JAPAN vol. 1998, no. 10, 31. August 1998 (1998-08-31) & JP 10 119683 A (NIPPON PLAST CO LTD), 12. Mai 1998 (1998-05-12)

## Beschreibung

Die Erfindung betrifft eine Gassack-Rückhalteeinrichtung, mit einem Gassackmodul, das einen Gassack mit einer Vorderwand hat, auf die der zurückzuhaltende Insasse im Rückhaltefall prallen kann und die eine Einbuchtung aufweist, die dadurch gebildet ist, daß ein Zentrumsabschnitt der Vorderwand am Modul befestigt ist und beim Aufblasen des Gassacks an einer Bewegung gehindert wird, und mit einer eine ringförmige Austrittsöffnung schließenden Modulabdeckung, wobei die Modulabdeckung ein zentrales Loch aufweist, das von einer beim Öffnungsvorgang feststehenden Kappe abgedeckt ist.

Die JP 10 119683 A zeigt eine Abdeckung für ein Gassackmodul, die entlang einer Sollbruchlinie aufreißen kann, wobei die Sollbruchlinie im Ausgangszustand von einem Emblem abgedeckt ist. Beim Aufblasen des Gassacks geben die schwenkbaren Klappen eine Austrittsöffnung für den Gassack frei, welche allerdings nicht ringförmig ist.

Eine ringförmige Austrittsöffnung für einen Gassack, die durch mehrere Öffnungsklappen einer Modulabdeckung am Innen- und/oder Außenrand der Austrittsöffnung freigegeben wird, ist in der DE 200 10 726 U offenbart, wobei die Öffnungsklappen nicht näher beschrieben sind.

Die gattungsgemäße DE 36 30 685 A zeigt in einer Ausführungsform ebenfalls eine Abdeckung für ein Gassackmodul mit einem, im aufgeblasenen Zustand, schlauchringförmigen Gassack, wobei die Modulabdeckung ein zentrales Loch und schwenkbare Abschnitte aufweist. Das zentrale Loch ist durch einen Schaumstoffstopfen verschlossen.

Eine Gassack-Rückhalteeinrichtung ist aus der DE 197 49 914 Al bekannt. Diese Einrichtung weist eine Gassackabdeckung auf, die im Bereich des Randes des zentralen Loches fest am Modul, genauer gesagt an einer starren Führungshülse befestigt ist und daran auch beim Öffnen der Abdeckung befestigt bleibt. Die Modulabdeckung hat zwei ringförmige Klappenabschnitte, wobei ein Ring radial innerhalb des anderen Ringes angeordnet ist und beide Ringe durch in Umfangsrichtung aneinandergrenzende Segmente gebildet sind. Die Abdeckung reißt zwischen den aneinandergrenzenden Ringen auf, wobei die

Segmente des inneren Ringes nach außen schwenken und die Segmente des äußeren Ringes einwärts und aufeinander zu schwenken. Die Segmente des inneren Ringes sind dann nur noch über die Führungshülse am Gassackmodul gehalten. Das Öffnen der Abdeckung soll stets möglichst mit geringer und exakt vorbestimmbarer Kraft erfolgen. Bei der bekannten Rückhalteeinrichtung ist dies jedoch nur schwer möglich.

Die Erfindung schafft eine Gassack-Rückhalteeinrichtung, bei der die Abdeckung mit geringer und relativ exakt vorbestimmbarer Kraft durch den Gassack geöffnet werden kann. Dies wird bei einer erfindungsgemaßen Einrichtung durch die Merkmale des Anspruchs 1 oder 2 erreicht. Bei der erfindungsgemäßen Einrichtung kann sich die Modulabdeckung radial vom Rand des Loches ausgehend öffnen oder sogar aufreißen, was mit deutlich weniger Kraftaufwand möglich ist als bei einer geschlossen ringförmigen Aufreißlinie. Dieses Öffnen von innen nach außen wird folgendermaßen ermöglicht: Die Modulabdeckung bleibt auch nicht teilweise im Bereich der Kappe beim Aufreißen stehen, sondern dank einer sich bei Aktivierung der Einrichtung lösenden Halteverbindung öffnet sie sich bzw. reißt sie radial von innen nach außen auf und klappt radial von innen nach außen. Das Öffnungsverhalten der Modulabdeckung kann damit verbessert werden.

Geht die Kappe mit dem Rand eine Nut-Feder-Verbindung ein, so ist einerseits der Rand der Abdeckung von außen nicht sichtbar Andererseits kann die Abdeckung im Bereich des Randes auch nicht z.B. durch spielende Kinder aufgehebelt werden, da der Rand nicht zugänglich ist.

Eine alternative Ausführungsform sieht vor, daß der Rand zwischen einer Unterseite der Kappe und einem Teil des Moduls, an dem die Kappe befestigt ist, geklemmt wird. Dieses Teil des Moduls ist beispielsweise der Gasgenerator oder ein den Gasgenerator umgebender Diffusor.

Die Modulabdeckung kann aus gegenüberliegenden Klappenabschnitten bestehen, die im Bereich ihrer Trennfuge formschlüssig miteinander verbunden sind. Die Klappenabschnitte sind somit separate, bereits vor dem Öffnen der Abdeckung getrennte Abschnitte, die aber dank der formschlüssigen Verbindung nicht von außen ohne weiteres zu öffnen sind.

Eine weitere Ausführungsform sieht vor, daß die Modulabdeckung eine Stirnwand und eine Seitenwand aufweist, wobei beide Wände getrennte Teile bilden und die Stirnwand am Übergang zur Seitenwand geklemmt ist. Diese Klemmung kann zugleich als Scharnier und damit als Schwenkachse für die Klappenabschnitte der Stirnwand dienen. Diese Ausführung ist im übrigen nicht nur auf einen Ring-Gassack und eine ringförmige Austrittsöffnung schließende Abdeckung beschränkt, vielmehr ist das Klemmprinzip auch auf herkömmliche Modulabdeckungen anwendbar.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine stilisierte Schnittansicht einer erfindungsgemäßen Gassack-Rückhalteeinrichtung mit einem entfalteten Gassack,
Fig. 2 eine Schnittansicht der Rückhalteeinrichtung nach Fig. 1 bei nicht geöffneter Abdeckung,
Fig. 3a bis 3g Schnittansichten im Bereich des mittigen Loches in der Abdeckung gemäß sechs verschiedenen Ausführungsformen und
Fig. 4 eine Draufsicht auf eine Modulabdeckung gemäß einer weiteren Ausführungform.

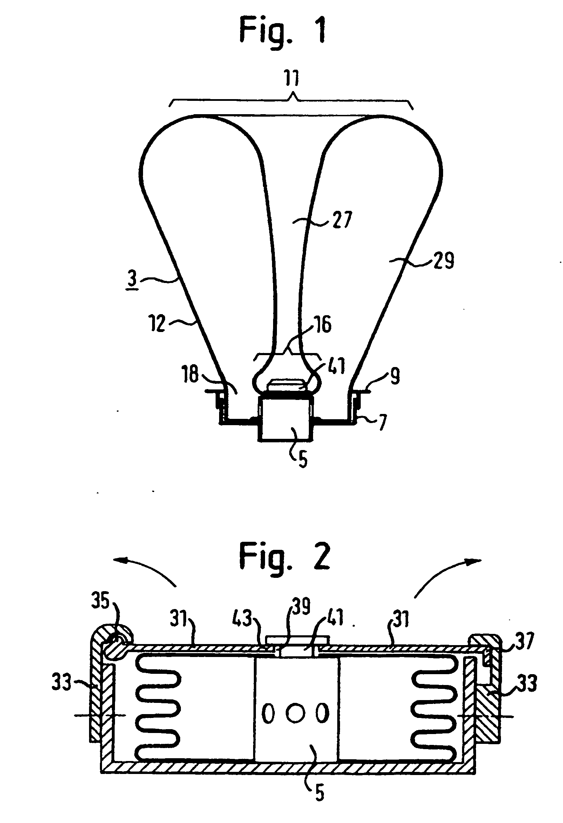

In Fig. 1 ist eine Gassack-Rückhalteeinrichtung mit einem Gassackmodul gezeigt, das einen Gassack 3, einen Gasgenerator 5 und ein topfförmiges Modulgehäuse 7 aufweist, welches von einer Modulabdeckung 9 geschlossen wird. Der Gassack hat eine Wand mit mehreren Abschnitten, nämlich mit einer Vorderwand 11, die dem zurückzuhaltenden Insassen zugewandt ist und auf die dieser im Rückhaltefall prallen kann, sowie einer Rückwand 12. Im Bereich der Vorderwand 11 ist eine tiefe Einbuchtung 27 im aufgeblasenen Zustand vorgesehen, die dadurch entsteht, daß ein Zentrumsabschnitt 16 der Vorderwand 11 bleibend am Modul, genauer gesagt am Gasgenerator 5 befestigt ist und dadurch an einer ungehinderten oder sogar an jeglicher Bewegung beim Aufblasen des Gassacks 3 aus dem Modul heraus gehindert wird. Durch die nicht mit Gas zu befüllende Einbuchtung 27 erhält der Gassack eine ringförmige, mit Gas zu befüllende Kammer 29. In Fig. 1 ist auch noch die ringförmige Austrittsöffnung 18 dargestellt, über die der Gassack 3 aus dem Gassackmodul austritt. Die Einbuchtung 27 kann nach oben z.B. durch einen geeigneten Zuschnitt des Gassacks bei voll aufgeblasenem Gassack auch geschlossen sein.

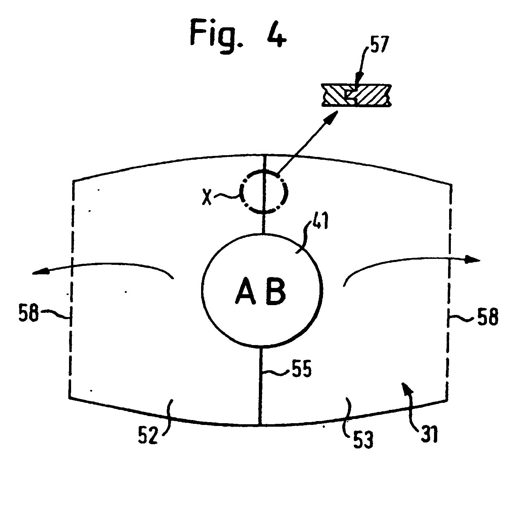

Fig. 2 ist zu entnehmen, daß die Modulabdeckung aus mehreren separaten Teilen besteht, die miteinander verbunden sind, nämlich einer Stirnwand 31 und umlaufenden Seitenwänden 33. Die Seitenwände 33 umfassen die seitlichen Ränder der Stirnwand 31, die in diesem Bereich eine Verdickung 35 (linke Hälfte von Fig. 2) oder 37 (rechte Hälfte von Fig. 2) aufweisen kann. Es ergibt sich durch die Klemmung der Stirnwand 31 eine Art Scharnier mit einer Schwenkachse entlang des äußeren Randes der Stirnwand 31. Die Stirnwand 31 ist entweder einteilig ausgeführt und hat vorbestimmte Aufreißlinien, die in Fig. 4 beispielsweise entlang der Linien 55 verlaufen, so daß Klappenabschnitte gebildet werden. Alternativ kann die Stirnwand 31 auch aus mehreren separaten Teilen bestehen.

Die Modulabdeckung 9, genauer die Stirnwand 31, hat ein zentrales Loch 39, das von außen durch eine feststehende Kappe 41 abgedeckt und nicht sichtbar ist. Der das Loch 39 definierende Rand 43 der Modulabdeckung 9 ist durch eine Halteverbindung, genauer gesagt eine in Schwenkrichtung (siehe Pfeile) wirkende Formschlußverbindung, mit der Kappe 41 verbunden, indem die Kappe 41 rückseitig am Außenrand eine umlaufende Nut hat, in die der Rand 43 ragt. Der Rand 43 ist damit von außen nicht zu erfassen. Die Kappe 41 ist am Gasgenerator 5 so befestigt, daß sie auch beim Öffnen der Abdeckkappe nicht vom Gasgenerator 5 gelöst wird. Üblicherweise wird der Zentrumsabschnitt 16 auch zwischen der Kappe 41 und der oberen Stirnwand des Gasgenerators 5 geklemmt (zusätzliche Kraftschlußverbindung) und damit auch für den Rückhaltefall am Gasgenerator 5 fixiert.

Im Rückhaltefall selbst bläst der Gasgenerator 5 den Gassack 3 auf, und dieser drückt, bezogen auf Fig. 2, die Modulabdeckung 9 nach oben. Entlang vorbestimmter, radial verlaufender Aufreißlinien reißt die Abdeckkappe vom Rand 43 aus nach außen auf Die Formschlußverbindung zwischen Rand 43 und Kappe 41 wird gelöst, und die beim Aufreißen entstehenden Klappenabschnitte schwenken um die Schwenkachsen, die parallel zu den Verdickungen 35, 37 verlaufen, in Pfeilrichtung nach außen. Der Gassack tritt schräg radial nach außen aus und nimmt die in Fig. 1 gezeigte Lage ein.

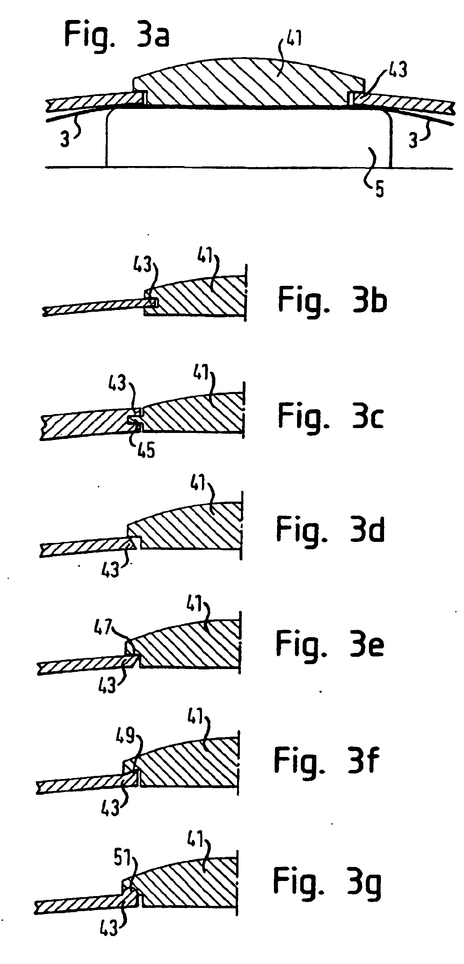

In den Fig. 3a bis 3g sind verschiedene Formschlußverbindungen zwischen der Kappe 41 und dem Rand 43 vergrößert dargestellt.

Fig. 3a zeigt die Ausführungsform nach Fig. 2 deutlicher.

Bei den Ausführungsformen nach den Fig. 3b und 3c ist als Formschlußverbindung eine Nut-Feder-Verbindung vorgesehen, wobei gemäß Fig. 3b am Außenumfang der Kappe 41 eine Nut vorgesehen ist, in die der Rand 43 ragt.

Gemäß Fig. 3c hat die Kappe 41 am Außenumfang einen Vorsprung 45, der in eine Nut im Rand 43 ragt.

Fig. 3d entspricht im wesentlichen Fig. 3a, wobei der Rand 43 aber, zum besseren Ausrasten aus der Formschlußverbindung, nach oben abgeschrägt ist.

Bei Fig. 3e hat der Rand 43 einen im Querschnitt hakenförmigen aufwärtsgerichteten Verlauf, mit dem er in die Nut 47 eingreift.

Ähnlich ist die Ausbildung nach Fig. 3f, wobei der Rand 43 einen in Öffnungsrichtung, also zur Unterseite der Kappe 41 weisenden umlaufenden Vorsprung 49 aufweist, mit dem er an der Unterseite der Kappe 41 andrückt. Die Kappe hat in diesem Bereich eine komplementär ausgebildete Vertiefung.

Der Vorsprung 51 ist in Fig. 3g als im Querschnitt halbrunder Wulst (Hinterschnitt) ausgebildet, der in eine ebenfalls komplementäre Vertiefung auf der Unterseite der Kappe 41 ragt. Durch diese Ausbildungen wird ein besserer Formschluß erreicht.

In Fig. 4 ist eine Ausführungsform dargestellt, bei der die Modulabdeckung 9 aus zwei gegenüberliegenden Klappenabschnitten 52, 53 besteht, die im Bereich einer Trennfuge 55 durch eine Nut-Feder-Verbindung 57, wie in der Vergrößerung des mit X umrahmten Bereichs im Schnitt zu sehen ist, miteinander verbunden sind. Die beiden gegenüberliegenden, nach außen schwenkenden Klappenabschnitte 52, 53 sind abschnittsweise an der Kappe 41, die ein Emblem "AB" trägt, formschlüssig befestigt und andererseits unmittelbar aneinander über die Nut-Feder-Verbindung lagefixiert. Mit unterbrochenen Linien sind die äußeren Ränder der Klappenabschnitte 52, 53 dargestellt, die die Schwenkachsen 58 der Klappenabschnitte 52, 53 bilden. Beim Öffnen der Modulabdeckung 9 wird die Nut-Feder-Verbindung 57 von innen nach außen aufgerissen (ohne eine Zerstörung von Teilen) oder, allgemeiner, gelöst.

## Patentansprüche

1. Gassack-Rückhalteeinrichtung, mit
einem Gassackmodul, das einen Gassack (3) mit einer Vorderwand (11) hat, auf die der zurückzuhaltende Insasse im Rückhaltefall prallen kann und die eine Einbuchtung (27) aufweist, die **dadurch** gebildet ist, daß ein Zentrumsabschnitt (16) der Vorderwand (11) am Modul befestigt ist und beim Aufblasen des Gassacks (3) an einer Bewegung gehindert wird, und
mit einer eine ringförmige Austrittsöffnung (18) schließenden Modulabdeckung (9),
wobei die Modulabdeckung (9) ein zentrales Loch (39) aufweist, das von einer beim Öffnungsvorgang feststehenden Kappe (41) abgedeckt ist,
wobei sich die Modulabdeckung (9) von ihrem das Loch (39) definierenden Rand (43) aus beim Öffnungsvorgang nach außen öffnet vorzugsweise aufreißt, und zwischen dem Rand (43) und der Kappe. (41) eine Halteverbindung vorhanden ist, die beim Öffnen gelöst wird,
**dadurch gekennzeichnet, daß** der Rand einen in Richtung zur Unterseite der Kappe (41) weisenden Vorsprung (49; 51) aufweist, mit dem er an einer, vorzugsweise zum Vorsprung (49; 51) komplementären, Vertiefung in der Unterseite der Kappe (41) anliegt.

2. Gassack-Rückhalteeinrichtung, mit
einem Gassackmodul, das einen Gassack (3) mit einer Vorderwand (11) hat, auf die der zurückzuhaltende Insasse im Rückhaltefall prallen kann und die eine Einbuchtung (27) aufweist, die **dadurch** gebildet ist, daß ein Zentrumsabschnitt (16) der Vorderwand (11) am Modul befestigt ist und beim Aufblasen des Gassacks (3) an einer Bewegung gehindert wird, und
mit einer eine ringförmige Austrittsöffnung (18) schließenden Modulabdeckung (9),
wobei die Modulabdeckung (9) ein zentrales Loch (39) aufweist, das von einer beim Öffnungsvorgang feststehenden Kappe (41) abgedeckt ist,
wobei sich die Modulabdeckung (9) von ihrem das Loch (39) definierenden Rand (43) aus beim Öffnungsvorgang nach außen öffnet vorzugsweise aufreißt, und zwischen dem Rand (43) und der Kappe (41) eine formschlüssige Halteverbindung vorhanden ist, die beim Öffnen gelöst wird,
**dadurch gekennzeichnet, daß** die Kappe (41) mit dem Rand (43) eine Nut-Feder-Verbindung eingeht.

3. Gassack-Rückhalteeinrichtung nach Anspruch 1 oder 2, **dadurch gekennzeichnet, daß** der Rand (43) zwischen einer Unterseite der Kappe (41) und einem Teil (5) des Moduls, an dem die Kappe (41) befestigt ist, geklemmt ist.

4. Gassack-Rückhalteeinrichtung nach einem der vorhergehenden Ansprüche, **dadurch gekennzeichnet, daß** die Modulabdeckung (9) aus gegenüberliegenden Klappenabschnitten (52, 53) besteht, die im Bereich ihrer Trennfuge (55) formschlüssig miteinander verbunden sind.

5. Gassack-Rückhalteeinrichtung nach einem der vorhergehenden Ansprüche, **dadurch gekennzeichnet, daß** wenigstens zwei gegenüberliegende, nach außen schwenkende Klappenabschnitte (52, 53) vorgesehen sind, die abschnittsweise einerseits an der Kappe (41) angreifen und andererseits formschlüssig ineinander eingreifen.

6. Gassack-Rückhalteeinrichtung nach einem der vorhergehenden Ansprüche, **dadurch gekennzeichnet, daß** die Modulabdeckung (9) eine Stirnwand (31) und eine Seitenwand (33) aufweist, wobei die Stirnwand (31) am Übergang zu den Seitenwänden (33) geklemmt ist.

7. Gassack-Rückhalteeinrichtung nach Anspruch 6, **dadurch gekennzeichnet, daß** im Bereich der Klemmung ein Scharnier gebildet ist, welches eine Schwenkachse (58) für einen Klappenabschnitt (52, 53) der Stirnwand (31) definiert.

## Claims

1. A gas bag restraint device, comprising
a gas bag module which has a gas bag (3) with a front wall (11) which an occupant to be restrained can impact upon in a case of restraint and which has an indentation (27) produced in that a center portion (16) of the front wall (11) is attached to the module and is prevented from moving when the gas bag (3) is inflated, and
a module cover (9) closing a ring-shaped outlet opening (18),
the module cover (9) having a central hole (39) which is covered by a cap (41) which is stationary during the opening process,
the module cover (9) opening outwards during the opening process, preferably tearing open, starting from its edge (43) defining the hole (39), and a holding connection being provided between the edge (43) and the cap (41), the holding connection being released during opening,
**characterized in that** the edge has a projection (49; 51) pointing towards the underside of the cap (41), the projection of the edge resting against a recess in the underside of the cap (41), the recess preferably being complementary to the projection (49; 51).

2. A gas bag restraint device, comprising
a gas bag module which has a gas bag (3) with a front wall (11) which an occupant to be restrained can impact upon in a case of restraint and which has an indentation (27) produced in that a center portion (16) of the front wall (11) is attached to the module and is prevented from moving when the gas bag (3) is inflated, and
a module cover (9) closing a ring-shaped outlet opening (18),
the module cover (9) having a central hole (39) which is covered by a cap (41) which is stationary during the opening process,
the module cover (9) opening outwards during the opening process, preferably tearing open, starting from its edge (43) defining the hole (39), and a form-fitting holding connection being provided between the edge (43) and the cap (41), the form-fitting holding connection being released during opening,
**characterized in that** the cap (41) establishes a tongue-and-groove joint with the edge (43).

3. The gas bag restraint device as claimed in claim 1 or 2, **characterized in that** the edge (43) is clamped between an underside of the cap (41) and a part (5) of the module to which the cap (41) is attached.

4. The gas bag restraint device as claimed in any of the preceding claims, **characterized in that** the module cover (9) consists of opposing flap portions (52, 53) which in the vicinity of their parting joint (55) are connected with each other in a form-fitting manner.

5. The gas bag restraint device as claimed in any of the preceding claims, **characterized in that** at least two opposing flap portions (52, 53) are provided which swivel outwards and have sections that on the one hand engage the flap (41) and on the other hand engage each other in a form-fitting manner.

6. The gas bag restraint device as claimed in any of the preceding claims, **characterized in that** the module cover (9) has an end wall (31) and a side wall (33), the end wall (31) being clamped at the transition to the side walls (33).

7. The gas bag restraint device as claimed in claim 6, **characterized in that** in the vicinity of the clamping a hinge is formed which defines a swivel axis (58) for a flap portion (52, 53) of the end wall (31).

## Revendications

1. Système de retenue à coussin à gaz, comportant
un module de coussin à gaz qui possède un coussin à gaz (3) avec une paroi antérieure (11) sur laquelle l'occupant à retenir peut tomber en cas de retenue et qui présente un creux (27) qui est formé par le fait qu'un tronçon central (16) de la paroi antérieure (11) est fixé sur le module et est empêché de se mouvoir lorsque le coussin à gaz (3) est gonflé, et
un couvercle de module (9) fermant un orifice de sortie (18) de forme annulaire,
le couvercle de module (9) présentant un trou (39) central qui est recouvert par un capuchon (41) stationnaire lors du processus d'ouverture,
lors du processus d'ouverture, le couvercle de module (9) s'ouvrant, de préférence se déchirant depuis son bord (43) définissant le trou (39), et entre le bord (43) et le capuchon (41) se trouvant une liaison de retenue qui est desserrée lors de l'ouverture,
**caractérisé en ce que** le bord présente une saillie (49 ; 51) tournée en direction de la face inférieure du capuchon (41), par laquelle le bord est en appui sur un creux dans la face inférieure du capuchon, lequel creux est de préférence complémentaire à la saillie (49 ; 51).

2. Système de retenue à coussin à gaz, comportant
un module de coussin à gaz qui possède un coussin à gaz (3) avec une paroi antérieure (11) sur laquelle l'occupant à retenir peut tomber en cas de retenue et qui présente un creux (27) qui est formé par le fait qu'un tronçon central (16) de la paroi antérieure (11) est fixé sur le module et est empêché de se mouvoir lorsque le coussin à gaz (3) est gonflé, et
un couvercle de module (9) fermant un orifice de sortie (18) de forme annulaire,
le couvercle de module (9) présentant un trou (39) central qui est recouvert par un capuchon (41) stationnaire lors du processus d'ouverture,
lors du processus d'ouverture, le couvercle de module (9) s'ouvrant, de préférence se déchirant depuis son bord (43) définissant le trou (39), et entre le bord (43) et le capuchon (41) se trouvant une liaison de retenue par coopération de formes qui est desserrée lors de l'ouverture,
**caractérisé en ce que** le capuchon (41) s'engage avec le bord (43) par une liaison à languette et à rainure.

3. Système de retenue à coussin à gaz selon la revendication 1 ou 2, **caractérisé en ce que** le bord (43) est serré entre une face inférieure du capuchon (41) et une partie (5) du module, sur laquelle le capuchon (41) est fixé.

4. Système de retenue à coussin à gaz selon l'une des revendications précédentes, **caractérisé en ce que** le couvercle de module (9) est constitué par des tronçons de volets (52, 53) opposés qui sont reliés l'un à l'autre par coopération de formes dans la région de leur joint de séparation (55).

5. Système de retenue à coussin à gaz selon l'une des revendications précédentes, **caractérisé en ce qu'**il est prévu au moins deux tronçons de volets (52, 53) opposés pivotant vers l'extérieur qui, d'une part, s'engagent par tronçons sur le capuchon (51) et, d'autre part, s'engagent l'un dans l'autre par coopération de formes.

6. Système de retenue à coussin à gaz selon l'une des revendications précédentes, **caractérisé en ce que** le couvercle de module (9) présente une paroi frontale (31) et une paroi latérale (33), la paroi frontale (31) étant serrée à la transition vers les parois latérales (33).

7. Système de retenue à coussin à gaz selon la revendication 6, **caractérisé en ce que** dans la région du serrage est formée une charnière qui définit un axe de pivotement (58) pour un tronçon de volet (52, 53) de la paroi frontale (31).
